# EUROPEAN PATENT APPLICATION

(11) **EP 4 790 967 A1**
(43) Date of publication of application: **12.08.2026**
(21) Application number: 25760865.3
(22) Date of filing: 24.02.2025
(51) Int. Cl.: H04L 67/125, H04L 67/62, H04W 4/40, H04M 1/72415, H04M 1/72412, B60R 16/023

(54) **VEHICLE CONTROL METHOD AND DEVICE, REMOTE CONTROL TERMINAL, AND STORAGE MEDIUM**

(30) Priority: 01.03.2024 CN 202410237231
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310000 (CN)
(72) Inventor: HUANG, Guanming, Ningbo, Zhejiang 315899 (CN); SHANG, Xin, Ningbo, Zhejiang 315899 (CN); WANG, Weixin, Ningbo, Zhejiang 315899 (CN); LIN, Bin, Ningbo, Zhejiang 315899 (CN); FENG, Yonghui, Ningbo, Zhejiang 315899 (CN)
(74) Representative: Elzaburu S.L.P.
(86) International application number: PCT/CN2025/078789
(87) International publication number: WO 2025/180324

(57) **Abstract**

The present application provides a vehicle control method, a vehicle control device, a remote control terminal, and a storage medium. The method includes: acquiring first data within a preset time period, where the first data is configured to characterize data generated in response to a user performing vehicle remote control related operations on the remote control terminal; determining a wake-up timing based on the first data; and in response to the wake-up timing arriving, waking up a vehicle-to-everything terminal in the vehicle.

## Description

### CROSS-REFERENCE TO RELATED APPLICATIONS

This application claims priority to Chinese Patent Application No. 202410237231.8, filed on March 1, 2024, the entire contents of which are incorporated herein by reference.

### TECHNICAL FIELD

The present application relates to the technical field of vehicle-to-everything, and in particular to a vehicle control method, a vehicle control device, a remote control terminal, and a storage medium.

### BACKGROUND

Vehicle-to-everything enables interconnection between a vehicle and a remote control terminal (e.g., a mobile terminal). The user may send a remote control command to a vehicle-to-everything terminal through the remote control terminal when remote control of the vehicle is needed.

In existing solutions, in order to save electric energy of the vehicle, the vehicle-to-everything terminal enters a sleep state upon occurrence of certain trigger events. For example, the vehicle-to-everything terminal enters a sleep state after the vehicle owner parks, powers off and locks the vehicle. In this case, after the vehicle receives a remote control command, the vehicle-to-everything terminal needs to enable networking, and then executes the remote control command after being woken up. Since a certain period of time is required for the vehicle-to-everything terminal to switch from a sleep state to a networked state, a problem of delayed response in vehicle remote control arises.

### SUMMARY

The main purpose of the present application is to provide a vehicle control method, a vehicle control device, a remote control terminal, and a storage medium, which aims to reduce the response time of remote vehicle control and thus reduce user waiting time.

In order to achieve the above purpose, the present application provides a vehicle control method, which is applied to a remote control terminal, and the vehicle control method includes:
acquiring first data within a preset time period, where the first data is configured to characterize data generated in response to a user performing vehicle remote control related operations on the remote control terminal;
determining a wake-up timing based on the first data; and
in response to the wake-up timing arriving, waking up a vehicle-to-everything terminal in the vehicle.

In an embodiment, the vehicle remote control related operations are performed through a remote control application in the remote control terminal;
the determining the wake-up timing based on the first data includes:
determining a start timing of the remote control application based on the first data; and
setting the wake-up timing based on the start timing.

In an embodiment, the first data includes a start time record of the remote control application;
the determining the start timing of the remote control application based on the first data includes:
based on the start time record, obtaining a start frequency of the remote control application in each time period, and recording the start frequency in the each time period as a first frequency corresponding to the each time period;
selecting a time period in which the corresponding first frequency reaches a preset first frequency threshold as a target time period; and
determining a first start timing based on the target time period.

In an embodiment, the determining the first start timing based on the target time period includes:
selecting a target time point from the target time period, and determining the first start timing upon detection of a current time point reaching the target time point.

In an embodiment, the first data includes a usage timing association record between the remote control application and other applications;
the determining the start timing of the remote control application based on the first data includes:
based on the usage timing association record between the remote control application and each of the other applications, determining a frequency at which the remote control application is started after a specific operation is performed by the other applications, and recording the frequency as a second frequency; and
in response to the second frequency reaching a preset second frequency threshold, determining the second start timing as receiving a specific operation completion instruction from the other applications.

In an embodiment, the first data includes a location record of the remote control terminal in response to the remote control application starting;
the determining the start timing of the remote control application based on the first data includes:
based on the location record, determining a frequency at which the remote control terminal is located at each location in response to the remote control application being started, and recording a frequency at which the remote control terminal is located at the each location as a third frequency corresponding to the each location;
selecting a position in which the corresponding third frequency is greater than a preset third frequency threshold as a target position; and
determining a third start timing based on the target position.

In an embodiment, the vehicle control method further includes:
in response to a start operation of the remote control application, waking up the vehicle-to-everything terminal,
where the remote control application is an application pre-installed in the remote control terminal configured to implement remote vehicle control operations.

The present application further provides a vehicle control device, which provides in the remote control terminal, and the vehicle control device includes:
an acquisition module configured to acquire first data within a preset time period, where the first data is configured to characterize data generated in response to a user performing vehicle remote control related operations on the remote control terminal;
a determination module configured to determine a wake-up timing based on the first data; and
a wake-up module configured to in response to the wake-up timing arriving, wake up a vehicle-to-everything terminal in the vehicle.

The present application further provides a remote control terminal, which includes a memory, a processor, and a vehicle remote control program stored in the memory and executable on the processor, and when the vehicle remote control program is executed by the processor, the vehicle control method described above is implemented.

The present application further provides a computer-readable storage medium, the computer-readable storage medium stores a vehicle remote control program, and when the vehicle remote control program is executed by a processor, the vehicle control method described above is implemented.

The vehicle control method, the vehicle control device, the remote control terminal, and the storage medium are provided by the embodiments of the present application, and the vehicle control method includes: acquiring first data within a preset time period, where the first data is configured to characterize data generated in response to a user performing vehicle remote control related operations on the remote control terminal; determining a wake-up timing based on the first data; and in response to the wake-up timing arriving, waking up a vehicle-to-everything terminal in the vehicle. The solution of this embodiment records the first data generated when the user remotely operates the vehicle, determines the wake-up timing based on the first data, and wakes up the vehicle-to-everything terminal when the wake-up timing arrives, so as to switch the vehicle-to-everything terminal from a sleep state to a networked state in advance. Thereby, during subsequent remote control of the vehicle, waiting for the vehicle-to-everything terminal to connect to the network is eliminated, and response time of vehicle remote control is reduced.

### BRIEF DESCRIPTION OF THE DRAWINGS

FIG. 1 is a flow chart of a vehicle remote control according to an embodiment of the prior art.
FIG. 2 is a schematic diagram of functional modules of the remote control terminal to which the vehicle remote control device belongs according to an embodiment of the present application.
FIG. 3 is a flow chart of a vehicle control method according to an embodiment of the present application.
FIG. 4 is a schematic diagram of a hardware environment for the application scenario involved in the present application.
FIG. 5 is a flow chart of the vehicle remote control according to an embodiment of the present application.
FIG. 6 is a flow chart of the vehicle control method according to another embodiment of the present application.
FIG. 7 is a flow chart of the vehicle control method according to another embodiment of the present application.
FIG. 8 is a flow chart of the vehicle remote control according to another embodiment of the present application.
FIG. 9 is a flow chart of the vehicle remote control according to another embodiment of the present application.

The achievement of the objectives, functional features, and advantages of the present application will be further explained with reference to the embodiments and accompanying drawings.

### DETAILED DESCRIPTION OF THE EMBODIMENTS

It should be understood that the specific embodiments described herein are only used to explain the present application, and are not intended to limit the present application.

The main solution of the present application is: acquiring first data within a preset time period, where the first data is configured to characterize data generated in response to a user performing vehicle remote control related operations on the remote control terminal; determining a wake-up timing based on the first data; and in response to the wake-up timing arriving, waking up a vehicle-to-everything terminal in the vehicle. The solution of this embodiment records the first data generated when the user remotely operates the vehicle, determines the wake-up timing based on the first data, and wakes up the vehicle-to-everything terminal when the wake-up timing arrives, so as to switch the vehicle-to-everything terminal from a sleep state to a networked state in advance. Thereby, during subsequent remote control of the vehicle, waiting for the vehicle-to-everything terminal to connect to the network is eliminated, and response time of vehicle remote control is reduced.

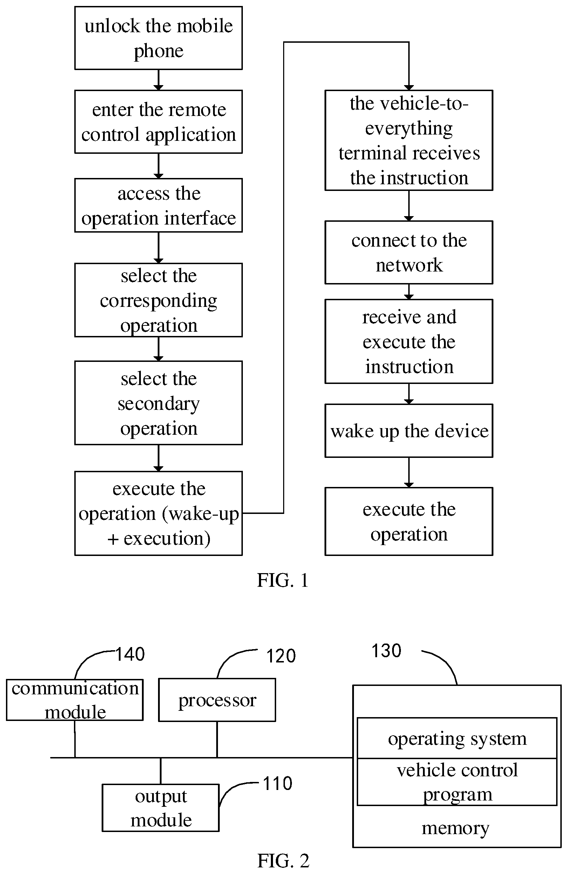

The related prior art solutions will now be described with reference to specific application scenarios. As shown in FIG. 1, which shows a flow chart of a remote vehicle control according to the prior art. In the prior art, the user needs to perform the following actions to operate remote control: unlock the mobile phone - enter the remote control application - access the remote control interface - enter the corresponding control application - select the corresponding secondary remote control operation, and generate the corresponding command (this command includes a wake-up command and a secondary remote control command). After receiving the command, the vehicle completes the network connection of the vehicle-to-everything terminal and then responds to the secondary remote control command. However, a certain amount of time is required for the vehicle-to-everything terminal to switch from a sleep state to a networked state, resulting in delayed response of the vehicle remote control.

Based on this, the present application provides a solution that records the first data generated when the user remotely operates the vehicle, determines the wake-up timing of the vehicle-to-everything terminal based on the first data, and wakes up the vehicle-to-everything terminal when the wake-up timing arrives. Thereby, during subsequent remote control of the vehicle, waiting for network connection establishment of the vehicle-to-everything terminal is eliminated, and response time of vehicle remote control is reduced.

In an embodiment, referring to FIG. 2, which is a schematic diagram of functional modules of the remote control terminal to which the vehicle remote control device belongs according to an embodiment of the present application. The vehicle remote control device may be a data processing device independent of the remote control terminal, and may be carried on the remote control terminal in the form of hardware or software. The remote control terminal may be a smart mobile terminal with a touch screen, such as a mobile phone, a tablet computer, or a smart phone, or a fixed terminal with a touch screen. This embodiment uses a mobile phone as an example.

In this embodiment, the remote control terminal of the vehicle remote control device includes at least an output module 110, a processor 120, a memory 130, and a communication module 140.

The memory 130 stores an operating system and a vehicle remote control program. The vehicle remote control device may store information such as the acquired first data in the memory 130. The output module 110 may be a display screen, a speaker, etc. The communication module 140 may include a WIFI module, a mobile communication module, and a Bluetooth module, etc., and communicates with external devices or servers through the communication module 140.

When the vehicle remote control program in memory 130 is executed by the processor, the following steps are implemented:
acquiring first data within a preset time period, where the first data is configured to characterize data generated in response to a user performing vehicle remote control related operations on the remote control terminal;
determining a wake-up timing based on the first data; and
in response to the wake-up timing arriving, waking up a vehicle-to-everything terminal in the vehicle.

When the vehicle remote control program in memory 130 is executed by the processor, the following steps are implemented:
determining a start timing of the remote control application based on the first data; and
setting the wake-up timing based on the start timing.

When the vehicle remote control program in memory 130 is executed by the processor, the following steps are implemented:
based on the start time record, obtaining a start frequency of the remote control application in each time period, and recording the start frequency in the each time period as a first frequency corresponding to the each time period;
selecting a time period in which the corresponding first frequency reaches a preset first frequency threshold as a target time period; and
determining a first start timing based on the target time period.

In an embodiment, when the vehicle remote control program in memory 130 is executed by the processor, the following steps are implemented:
selecting a target time point from the target time period, and determining the first start timing upon detection of a current time point reaching the target time point.

In an embodiment, when the vehicle remote control program in memory 130 is executed by the processor, the following steps are implemented:
based on the usage timing association record between the remote control application and each of the other applications, determining a frequency at which the remote control application is started after a specific operation is performed by the other applications, and recording the frequency as a second frequency; and
in response to the second frequency reaching a preset second frequency threshold, determining the second start timing as receiving a specific operation completion instruction from the other applications.

In an embodiment, when the vehicle remote control program in memory 130 is executed by the processor, the following steps are implemented:
based on the location record, determining a frequency at which the remote control terminal is located at each location in response to the remote control application being started, and recording a frequency at which the remote control terminal is located at the each location as a third frequency corresponding to the each location;
selecting a position in which the corresponding third frequency is greater than a preset third frequency threshold as a target position; and
determining a third start timing based on the target position.

In an embodiment, when the vehicle remote control program in memory 130 is executed by the processor, the following steps are implemented:
in response to a start operation of the remote control application, waking up the vehicle-to-everything terminal, where the remote control application is an application pre-installed in the remote control terminal configured to implement remote vehicle control operations.

Through the above solution, this embodiment specifically acquires first data within a preset time period, where the first data is configured to characterize data generated in response to a user performing vehicle remote control related operations on the remote control terminal; determines a wake-up timing based on the first data; and in response to the wake-up timing arriving, wakes up a vehicle-to-everything terminal in the vehicle. The solution of this embodiment records the first data generated when the user remotely operates the vehicle, determines the wake-up timing based on the first data, and wakes up the vehicle-to-everything terminal when the wake-up timing arrives, so as to switch the vehicle-to-everything terminal from a sleep state to a networked state in advance. Thereby, during subsequent remote control of the vehicle, waiting for the vehicle-to-everything terminal to connect to the network is eliminated, and response time of vehicle remote control is reduced.

Based on, but not limited to, the remote control terminal architecture described above, the present application provides an embodiment of the method. The executing entity of this embodiment's method may be a vehicle control device or a remote control terminal, which may be a mobile phone.

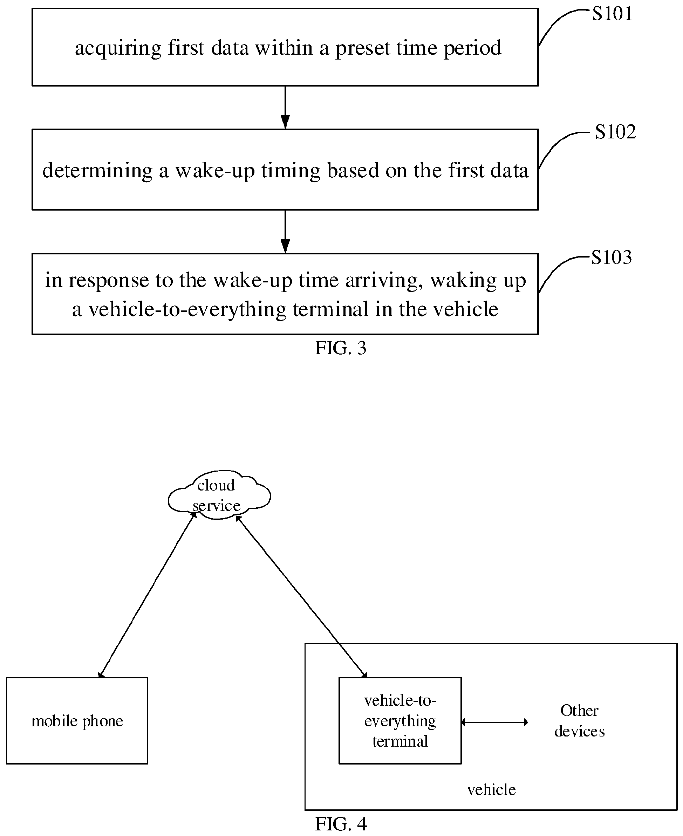

Referring to FIG. 3, which is a flow chart of the vehicle control method according to an embodiment of the present application, and the vehicle control method of this embodiment includes:
Step S101, acquiring first data within a preset time period.

In this embodiment, the preset time period may be selected according to the actual situation. For example, the four months prior to the current date may be selected as the preset time period, or the period from October 1, 2023 to January 1, 2024 may be selected as the preset time period.

In the solution of this embodiment, the above first data may be configured to characterize the data generated when the user performs vehicle remote control related operations on the remote control terminal. For example, when the user performs operations such as remotely waking up the vehicle-to-everything terminal or remotely turning on the air conditioner through the remote control terminal, first data such as the wake-up timing of the remotely waking up the vehicle-to-everything terminal and the time for remotely turning on the air conditioner will be generated.

Furthermore, a remote control application may be pre-installed on the remote control terminal, and the remote control application is configured to implement remote control of the vehicle. Specifically, a plurality of applications are deployed on the remote control terminal, including Taobao, WeChat, and a vehicle remote control application, etc. When performing remote control of the vehicle, the user may implement remote control of the vehicle through a remote operation interface provided by the vehicle remote control application in the remote control terminal, including remotely waking up the vehicle and remotely turning on the vehicle air conditioner.

In an embodiment, the first data may include at least one of start time records of the remote control application, wake-up time records of the vehicle-to-everything terminal, usage timing association records of the remote control application and other applications, and location records of the remote control terminal in response to a start operation of the remote control application.

Step S102, determining a wake-up timing based on the first data.

In the solution of this embodiment, the wake-up timing may be configured to characterize the early wake-up timing of the vehicle-to-everything terminal obtained based on the analysis of the first data. Specifically, the remote control terminal may analyze, based on the first data, which specific events are more likely to trigger a user to perform a wake-up operation on the vehicle-to-everything terminal, and thus wake up the vehicle-to-everything terminal in advance when the specific event occurs; that is, the wake-up timing is when the specific event is detected. Alternatively, the remote control terminal may analyze, based on the first data, to determine at which specific time point the vehicle-to-everything terminal is more likely to be woken up, and determine a time point before that specific time point as the wake-up timing. For example, if the analysis of the first data indicates that the user is highly likely to wake up the vehicle-to-everything terminal at 10:00:00, the remote control terminal may set this wake-up timing to 09:55:00 to wake up the vehicle-to-everything terminal in advance. This allows the vehicle to respond promptly to the secondary remote operation command sent by the user to the vehicle through the remote control terminal at 10:00:00, instead of responding to the secondary remote operation command only after the vehicle-to-everything terminal has completed networking as in the prior art, thereby reducing the latency of remote vehicle control and shortening the user waiting time. The secondary remote operation command is a specific remote vehicle control command, such as remotely turning on the air conditioning, while the wake-up command is a primary remote operation command.

In the solution of this embodiment, the implementation scheme for determining the wake-up timing based on the first data from the remote control terminal may include:

In an embodiment, the remote control terminal may determine a specific event that triggers the wake-up operation of the vehicle-to-everything terminal based on the first data, and in response to the specific event receiving, determining the wake-up timing.

In another embodiment, the remote control terminal may determine the start timing of the remote control application based on the first data; and set the wake-up timing based on the start timing.

Specifically, the start timing of the remote control application may be used as the wake-up timing. Since the remote control application is an application in the remote control terminal for implementing vehicle remote control operations, it may be determined that the user is to perform a vehicle remote control operation when the user taps a program icon corresponding to the remote control application, i.e., when the remote control application is started. Therefore, the vehicle-to-everything terminal is woken up when the remote control application is started. Subsequently, when the user sends a secondary remote operation control command to the vehicle-to-everything terminal through the remote operation interface provided by the remote control application, the vehicle-to-everything terminal is already in a woken-up state and can respond to the secondary remote operation control command in a timely manner.

Referring to FIG. 4, which is a schematic diagram of a hardware environment for the application scenario involved in the present application. As shown in FIG. 4, in this example, a mobile phone is used as the remote control terminal. Generally, the interaction between the mobile phone and the car is mainly through the following methods: the mobile phone interacts with the vehicle-to-everything terminal through cloud services, and the vehicle-to-everything terminal then interacts with other devices in the vehicle.

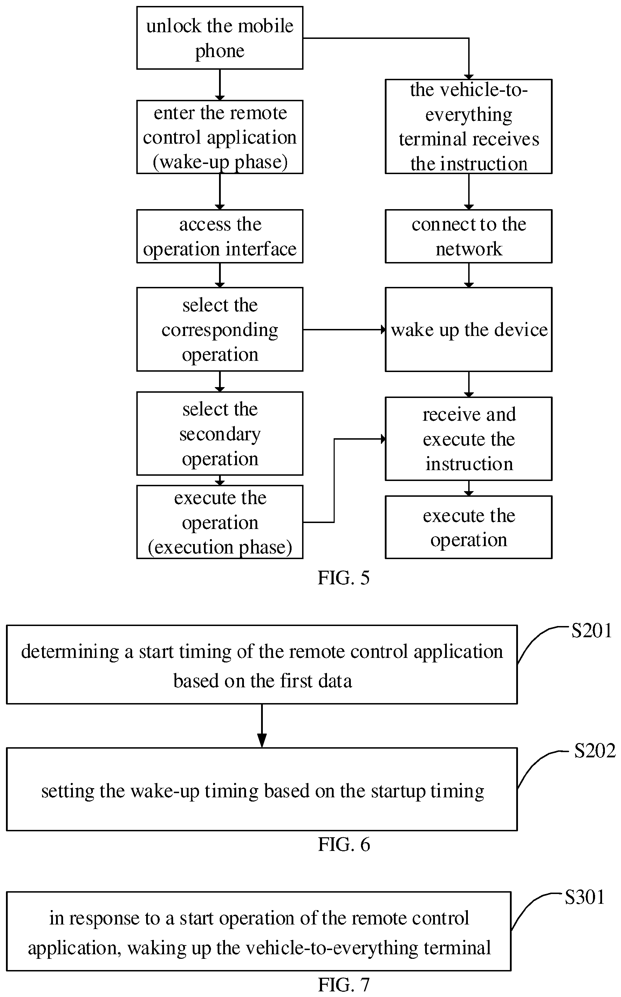

To reduce the delayed response time of vehicle remote control and thus decrease user waiting time, referring to FIG. 5, which is a schematic diagram of a hardware environment for the application scenario involved in the present application. Initially, the vehicle-to-everything terminal is in a sleep state. After unlocking the mobile phone, and before performing a secondary remote control operation on the remote control terminal, the user may detect whether a wake-up timing has arrived. Upon detecting that the wake-up timing has arrived (for example, the current time point is a specific time point, the location of the mobile terminal is is at a specific location, or the mobile phone receives an alarm instruction from an alarm application), a remote wake-up operation of the vehicle-to-everything terminal is performed to wake up the vehicle-to-everything terminal in advance. Then, when the user executes a secondary operation command through the remote operation interface provided by the remote control application, such as remotely turning on the vehicle air conditioning, there is no need to wait for the vehicle-to-everything terminal to switch from a sleep state to a networked state, thereby reducing the delayed response time of vehicle remote control and reducing user waiting time.

Step S103, in response to the wake-up timing arriving, waking up a vehicle-to-everything terminal in the vehicle.

In the solution of this embodiment, the remote control terminal wakes up the vehicle-to-everything terminal in advance when detecting that the wake-up timing has arrived. Therefore, in subsequent remote control operations, when the user intends to send a secondary remote operation control command to the vehicle-to-everything terminal through the remote operation interface provided by the remote control application, the vehicle can respond to the secondary remote operation control command in a timely manner since the vehicle-to-everything terminal is already connected to the network, waiting for the vehicle-to-everything terminal to connect to the network is eliminated, thereby reducing the response time for remote vehicle control.

This embodiment, through the above, acquires first data within a preset time period; where the first data is configured to characterize data generated in response to a user performing vehicle remote control related operations on the remote control terminal; determining a wake-up timing based on the first data; and in response to the wake-up timing arriving, waking up a vehicle-to-everything terminal in the vehicle. The solution of this embodiment records the first data generated when the user remotely operates the vehicle, determines the wake-up timing based on the first data, and wakes up the vehicle-to-everything terminal when the wake-up timing arrives, so as to switch the vehicle-to-everything terminal from a sleep state to a networked state in advance. Thereby, during subsequent vehicle remote control, waiting for the vehicle-to-everything terminal to connect to the network is eliminated, and response time of vehicle remote control is reduced.

Referring to FIG. 6, which is a flow chart of the vehicle control method according to another embodiment of the present application.

Compared to the vehicle control method shown in FIG. 3, this embodiment improves the content related to step S102, which may include:
Step S201, determining a start timing of the remote control application based on the first data.

In the solution of this embodiment, the implementation scheme for determining the start timing of the remote control application based on the first data may include:

In a first implementation, the first data may include a start time record of the remote control application; correspondingly, the determining the start timing of the remote control application based on the first data may include:
Step S2011, based on the start time record, obtaining a start frequency of the remote control application in each time period, and recording the start frequency in the each time period as a first frequency corresponding to the each time period.

Specifically, the start time record of the remote control application may include the start time recorded each time the remote control application is started within a preset time period. For example, during the period from October 1, 2023 to January 1, 2024, the user accesses the remote control application by clicking an app icon corresponding to the remote control application on the user interface provided by the remote control terminal. At this time, the remote control terminal will record the start time at which the remote control application is started, and stores the start time in a storage module.

Then, the remote control terminal calculates the time period corresponding to the start timing of each start of the remote control application, and counts the number of times the start timing occurs in each time period, as well as the sum of the number of times the start timing occurs in all time periods. By calculating the ratio of the number of times the start timing occurs in each time period to the sum of the number of times the start timing occurs in all time periods, the first frequency corresponding to each time period is obtained. The time periods may be divided according to actual needs. For example, the remote control terminal may divide the time periods by each hour, that is, the divided time periods may include: 00:00:00~01:00:00, 01:00:00~00:02:00, ..., 23:00:00~24:00:00.

For example, assuming that the start timing of the remote control application within a preset time period are 10:00:00, 10:04:00, 14:03:08, and 16:09:09, then within the preset time period, the number of times the startup time of the remote control application falls within the time slot of 10:00:00~11:00:00 is 2, and the sum of the number of times the start timing appears in all time periods within the preset time period is 4. Therefore, the first frequency corresponding to the start timing of the remote control application within the 10:00:00~11:00:00 time period is 2/4 = 1/2.

Step S2012, selecting a time period in which the corresponding first frequency reaches a preset first frequency threshold as a target time period.

The first frequency threshold can be set according to the actual situation.

S2013, determining a first start timing based on the target time period.

In the solution of this embodiment, the remote control terminal may select a target time point from the target time period and determine the first start timing as the detection that the current time point has reached the target time point.

Specifically, the target time point may be selected randomly or a time point preset by the user, such as a start time point of the target time period may be used as the target time point.

In a second implementation, the first data mentioned above may include usage timing association records between the remote control application and other applications. Accordingly, the above step S201, i.e., the determines the start timing of the remote control application based on the first data may include:
Step S2011`, based on the usage timing association record between the remote control application and each of the other applications, determining a frequency at which the remote control application is started after a specific operation is performed by the other applications, and recording the frequency as a second frequency.

In the solution of this embodiment, the usage timing association records between the remote control application and each of the other applications refers to the historical usage timing association records of the remote control application in the remote control terminal and each of the other applications used by a user within a preset time period. For example, after the user performs a specific operation on the first application on the remote control terminal at 8:00, the user switch to the remote control application to perform an operation.

In the solution of this embodiment, the specific operation is a preset operation, which may be a push operation of a message related to vehicle machine wake-up, or a push operation of an early warning message for vehicle machine abnormality.

Taking a reminder message sent from a calendar/memo app on a remote control terminal (such as a mobile phone) as an example, if a user has set up a reminder function on the memo/log software to travel by car at 7 o'clock tomorrow, when the vehicle-to-everything terminal receives the vehicle usage prompt message "You need to travel by car at 7 o'clock today" sent by the calendar/memo software, the remote control terminal may detect whether an operation of starting the remote control application is performed after receiving the vehicle usage prompt message, and then calculate the second frequency.

As another example, when a specific operation is performed by a vehicle monitoring application in the remote control terminal, when the vehicle monitoring software detects that the vehicle's location information and the remote control terminal's location information are less than a preset distance threshold, it generates a reminder message, such as "Your car has been detected nearby. Do you want to wake up the vehicle?" The remote control terminal may detect whether an operation of starting the remote control application is performed after receiving the reminder message, and further calculate the second frequency.

As another example, when a specific operation is performed by a navigation application (APP) in the remote control terminal, when the system detects that the user sends a message to wake up the vehicle through the voice assistant of the navigation APP, the remote control terminal may detect whether an operation of starting the remote control application is performed after receiving the message, and thus be able to calculate the second frequency.

Specifically, the second frequency is calculated as the ratio of: the number of times the remote control application is started after a specific operation is performed by another application within a preset time period to the number of times the specific operation is performed by the other application within the preset time period. For example, assuming that after the first application generates a warning message within the preset time period, the user starts the remote control application 5 times, and after the first application generates a warning message, the user performs other operations 5 times, then the frequency of starting the remote control application after the first application generates a warning message = 5/(5+5) = 1/2.

In this embodiment, based on the usage timing association records between the remote control application and each of the other applications, since the other applications may have an association relationship with related functions on the vehicle machine, it is possible to determine whether the user prefers to start the remote control application after a specific operation is performed by the other applications by calculating a frequency of starting the remote control application after the specific operation is performed by the other applications. In this way, user usage habits can be taken into account, thereby achieving the purpose of waking up the vehicle machine in advance. Step S2012`, in response to the second frequency reaching a preset second frequency threshold, determining the second start timing as receiving a specific operation completion instruction from the other applications.

The second frequency threshold is determined based on the actual situation.

In the solution of this embodiment, when the second frequency of starting the remote control application in the remote control terminal after a specific operation is performed by another application is greater than a preset second frequency threshold, it indicates that the user has a high probability of starting the remote control application after the specific operation is performed by the other application. Since the remote control application is configured to realize remote vehicle control, when the vehicle is in a sleep state, remote vehicle control requires waking up the vehicle-to-everything terminal first. Therefore, it may be considered that the probability of the user remotely waking up the vehicle-to-everything terminal after starting the remote control application is very high. Thus, the remote control terminal may start the remote control application and wake up the vehicle-to-everything terminal through the remote control application after receiving a specific operation completion instruction from the other applications.

In the third implementation, the first data may include a location record of the remote control terminal when a start operation of the remote control application is performed; correspondingly, the above step S201, i.e., the determining the start timing of the remote control application based on the first data may include:

S2011``, based on the location record, determining a frequency at which the remote control terminal is located at each location in response to the remote control application being started, and recording a frequency at which the remote control terminal is located at the each location as a third frequency corresponding to the each location.

In the solution of this embodiment, when the remote control application is started, the location record of the remote control terminal may include the location information of the remote control terminal recorded when the user start the remote control application in the remote control terminal within a preset time period.

In the solution of this embodiment, the remote control terminal may count the location of the remote control terminal each time the user starts the remote control application within a preset time period, and obtain the number of times each location of the remote control terminal appears when the remote control application is started, as well as the total number of times the remote control application is started within the preset time period. Thus, by calculating the ratio of the number of times each location of the remote control terminal appears to the total number of times the remote control application is started within the preset time period, the frequency of the remote control terminal at each location when the remote control application is started can be obtained, that is, the third frequency corresponding to each location.

For example, assuming the remote control application is started 5 times within a preset time period, and the vehicle remote control terminal is located at position 1, position 2, position 3, and position 4 when the remote control application is started, then when the remote control application is started, the remote control terminal is at the third frequency corresponding to position 1 = 2/5.

S2012``, selecting a position in which the corresponding third frequency is greater than a preset third frequency threshold as a target position.

The preset third frequency threshold may be determined according to the actual situation.

S1023``, determining a third start timing based on the target position.

In one implementation, the remote control terminal may determine the target area based on the target location and determine the third start timing as when the remote control terminal is within the target area. Specifically, the remote control terminal may divide the target area with the target location as the center and a preset radius as the radius, thereby determining the third start timing as when the remote control terminal is within the target area, that is, when the remote control terminal is detected to be within the target area, the vehicle-to-everything terminal is woken up.

As another implementation, the remote control terminal may set the third start timing to when the remote control terminal is at the target location.

Step S202, setting the wake-up timing based on the start timing.

Specifically, the start timing of the remote control application may be used as the wake-up timing. Since the remote control application is used in the remote control terminal to implement remote vehicle control operations, when the user clicks the program icon corresponding to the remote control application, i.e., when the remote control application is started, it can be determined that the user intends to perform a remote vehicle control operation. Therefore, when the remote control application is started, the vehicle-to-everything terminal is woken up in advance. Subsequently, when the user intends to send a secondary remote operation control command to the vehicle-to-everything terminal through the remote operation interface provided by the remote control application, the vehicle-to-everything terminal is already connected to the network and can respond to the secondary remote operation control command in a timely manner.

In the this embodiment, through the above scheme, a start timing of the remote control application is determined based on the first data, and a wake-up timing is set based on the start timing, so as to wake up the vehicle-to-everything terminal in advance and switch the vehicle-to-everything terminal from a sleep state to a networked state in advance. Thus, when a user subsequently sends a secondary remote operation control command to the vehicle-to-everything terminal through the remote control application, the vehicle-to-everything terminal can respond to the secondary remote operation control command in a timely manner, thereby reducing the response time of vehicle remote control and reducing user waiting time.

Referring to FIG. 7, which is a flow chart of the vehicle control method according to another embodiment of the present application, the vehicle control method of this embodiment may further include:
Step S301, in response to a start operation of the remote control application, waking up the vehicle-to-everything terminal.

The remote control application is an application pre-installed in the remote control terminal for realizing remote control operation of the vehicle.

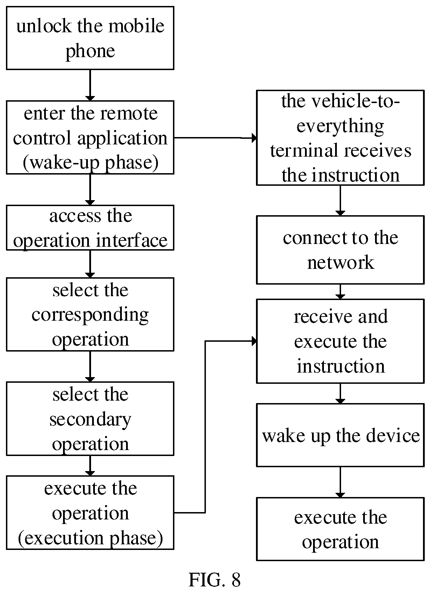

Referring to FIG. 8, which is a flow chart of the vehicle remote control according to another embodiment of the present application. In the solution of this embodiment, when the user pre-wakes up the vehicle-to-everything terminal, the user wakes up the vehicle-to-everything terminal when entering the remote control application, rather than the user selecting the wake-up operation through the remote operation interface provided by the remote control application after entering the remote control application to wake up the vehicle-to-everything terminal in conventional solutions. The solution of this embodiment enables the vehicle-to-everything terminal and the mobile phone to operate in parallel, thereby reducing the user waiting time.

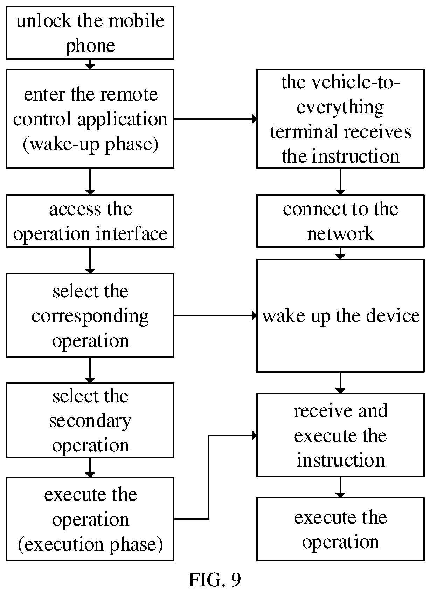

Furthermore, if remote control involves secondary operations, such as remotely turning on the air conditioner, as shown in FIG. 9, which is a flow chart of the vehicle remote control according to another embodiment of the present application, when a user enters the air conditioner control page through the remote operation interface provided by the remote control application and sets the air conditioner temperature, duration, etc. While setting, the user can simultaneously perform the vehicle's preparatory work, such as connecting the high voltage, thereby reducing the waiting time for air conditioner startup.

The solution of this embodiment wakes up the vehicle-to-everything terminal by responding to the start operation of the remote control application, allowing the vehicle-to-everything terminal to connect to the network in parallel with the operation of the remote control terminal, thereby reducing user waiting time.

In addition, the present application further provides a vehicle remote control device. The vehicle control device in this embodiment may be located in a remote control terminal, and the vehicle remote control device may include: an acquisition module, a determination module and a wake-up module.

The acquisition module is configured to acquire first data within a preset time period, where the first data is configured to characterize data generated in response to a user performing vehicle remote control related operations on the remote control terminal;

The determination module is configured to determine a wake-up timing based on the first data; and

The wake-up module is configured to in response to the wake-up timing arriving,
wake up a vehicle-to-everything terminal in the vehicle.

The principle and implementation process of the vehicle control device in this embodiment are described in the above embodiments and will not be repeated here.

In addition, the present application further provides a remote control terminal, which includes a memory, a processor, and a vehicle remote control program stored in the remote control terminal memory and executable on the remote control terminal processor. When the remote control terminal vehicle remote control program is executed by the remote control terminal processor, the vehicle control method of the remote control terminal as described above is implemented.

Since the remote control program for this vehicle employs all the technical solutions of all the aforementioned embodiments when executed by the processor, it has at least all the beneficial effects brought about by all the technical solutions of all the aforementioned embodiments, which will not be elaborated here.

In addition, the application further provides a computer-readable storage medium, the computer-readable storage medium stores a vehicle remote control program, and when the vehicle remote control program is executed by a processor, the vehicle control method described above is implemented.

Since the remote control program for this vehicle employs all the technical solutions of all the aforementioned embodiments when executed by the processor, it has at least all the beneficial effects brought about by all the technical solutions of all the aforementioned embodiments, which will not be elaborated here.

Compared to the prior art, the vehicle control method, the vehicle control device, the remote control terminal, and the storage medium are provided in the embodiments of the present application. The vehicle control method includes: acquiring first data within a preset time period, where the first data is configured to characterize data generated in response to a user performing vehicle remote control related operations on the remote control terminal; determining a wake-up timing based on the first data; and in response to the wake-up timing arriving, waking up a vehicle-to-everything terminal in the vehicle. The solution of this embodiment records the first data generated when the user remotely operates the vehicle, determines the wake-up timing based on the first data, and wakes up the vehicle-to-everything terminal when the wake-up timing arrives, so as to switch the vehicle-to-everything terminal from a sleep state to a networked state in advance. Thereby, during subsequent remote control of the vehicle, waiting for the vehicle-to-everything terminal to connect to the network is eliminated, and response time of vehicle remote control is reduced.

It should be noted that, as used herein, the terms "include", "comprise" or any other variation thereof are intended to cover a non-exclusive inclusion, such that a process, method, article or system that includes a list of elements not only includes those elements, but also includes other elements not expressly listed or that are inherent to the process, method, article or system. Without further limitation, an element defined by the statement "comprises a . . ." does not exclude the presence of other identical elements in the process, method, article, or system that includes that element.

The above serial numbers of the embodiments of the present application are only for description and do not represent the advantages and disadvantages of the embodiments.

Through the above description of the embodiments, those skilled in the art can clearly understand that the methods of the above embodiments can be implemented by means of software plus the necessary general hardware platform. Of course, it can also be implemented by hardware, but in many cases the former is the better implementation. Based on this understanding, the technical solution of the present application can be embodied in the form of a software product that is essentially or contributes to the existing technology. The computer software product is stored in a storage medium (such as ROM/RAM, magnetic disk, optical disk), including several instructions to cause a terminal device (which can be a mobile phone, computer, server, or network device, etc.) to execute the methods described in various embodiments of the present application.

The above descriptions are only some embodiments of the present application, and are not intended to limit the scope of the present application. Any equivalent structure or equivalent process transformation made using the contents of the description and drawings of the present application, or directly or indirectly used in other related technical fields, are all equally included in the scope of the present application.

## Claims

1. A vehicle control method, applied to a remote control terminal, **characterized by** comprising:
acquiring first data within a preset time period, wherein the first data is configured to characterize data generated in response to a user performing vehicle remote control related operations on the remote control terminal;
determining a wake-up timing based on the first data; and
in response to the wake-up timing arriving, waking up a vehicle-to-everything terminal in the vehicle.

2. The vehicle control method according to claim 1, wherein the vehicle remote control related operations are performed through a remote control application in the remote control terminal; the determining the wake-up timing based on the first data comprises:
determining a start timing of the remote control application based on the first data; and
setting the wake-up timing based on the start timing.

3. The vehicle control method according to claim 2, wherein the first data comprises a start time record of the remote control application;
the determining the start timing of the remote control application based on the first data comprises:
based on the start time record, obtaining a start frequency of the remote control application in each time period, and recording the start frequency in the each time period as a first frequency corresponding to the each time period;
selecting a time period in which the corresponding first frequency reaches a preset first frequency threshold as a target time period; and
determining a first start timing based on the target time period.

4. The vehicle control method according to claim 3, wherein the determining the first start timing based on the target time period comprises:
selecting a target time point from the target time period, and determining the first start timing upon detection of a current time point reaching the target time point.

5. The vehicle control method according to claim 2, wherein the first data comprises a usage timing association record between the remote control application and other applications;
the determining the start timing of the remote control application based on the first data comprises:
based on the usage timing association record between the remote control application and each of the other applications, determining a frequency at which the remote control application is started after a specific operation is performed by the other applications, and recording the frequency as a second frequency; and
in response to the second frequency reaching a preset second frequency threshold, determining the second start timing as receiving a specific operation completion instruction from the other applications.

6. The vehicle control method according to claim 2, wherein the first data comprises a location record of the remote control terminal in response to the remote control application starting;
the determining the start timing of the remote control application based on the first data comprises:
based on the location record, determining a frequency at which the remote control terminal is located at each location in response to the remote control application being started, and recording a frequency at which the remote control terminal is located at the each location as a third frequency corresponding to the each location;
selecting a position in which the corresponding third frequency is greater than a preset third frequency threshold as a target position; and
determining a third start timing based on the target position.

7. The vehicle control method according to claim 6, wherein the determining the third start timing based on the target position comprises:
determining a target area based on the target location, and determining the third start timing in response to the remote control terminal being within a range of the target area.

8. The vehicle control method according to claim 6, wherein the determining the third start timing based on the target position comprises:
in response to the remote control terminal being at the target location, determining the third start timing.

9. The vehicle control method according to claim 1, further comprising:
in response to a start operation of the remote control application, waking up the vehicle-to-everything terminal, wherein the remote control application is an application pre-installed in the remote control terminal configured to implement remote vehicle control operations.

10. The vehicle control method according to claim 1, wherein the determining the wake-up timing based on the first data comprises:
determining a specific event that triggers a wake-up operation of the vehicle-to-everything terminal based on the first data; and
in response to receiving the specific event, determining the wake-up timing.

11. The vehicle control method according to claim 1, wherein the first data comprises at least one of start time records of the remote control application, wake-up time records of the vehicle-to-everything terminal, usage timing association records between the remote control application and other applications, and location records of the remote control terminal in response to a start operation of the remote control application.

12. The vehicle control method according to claim 5, wherein the second frequency is calculated as a ratio of a number of times the remote control application is started after a specific operation is performed by the other application within the preset time period to a number of times the specific operation is performed by the other application within the preset time period.

13. A vehicle control device, provided in the remote control terminal, **characterized by** comprising:
an acquisition module configured to acquire first data within a preset time period, wherein the first data is configured to characterize data generated in response to a user performing vehicle remote control related operations on the remote control terminal;
a determination module configured to determine a wake-up timing based on the first data; and
a wake-up module configured to in response to the wake-up timing arriving, wake up a vehicle-to-everything terminal in the vehicle.

14. A remote control terminal, **characterized by** comprising a memory, a processor, and a vehicle remote control program stored in the memory and executable on the processor, wherein when the vehicle remote control program is executed by the processor, the vehicle control method according to any one of claims 1 to 12 is implemented.

15. A computer-readable storage medium, **characterized in that** the computer-readable storage medium stores a vehicle remote control program, and when the vehicle remote control program is executed by a processor, the vehicle control method according to any one of claims 1 to 12 is implemented.
